# EUROPEAN PATENT APPLICATION

(11) **EP 0 631 902 A1**
(43) Date of publication of application: **04.01.1995**
(21) Application number: 94304477.6
(22) Date of filing: 20.06.1994
(51) Int. Cl.: B60N 2/24, B60N 2/30

(54) **Seat device**

(30) Priority: 02.07.1993 GB 9313694
(71) Applicant: VULCAN ENGINEERING COMPANY (HALIFAX) LIMITED, Halifax, West Yorkshire HX3 8EF (GB)
(72) Inventor: Horner, Susan Elizabeth, Brighouse HD6 3RN (GB)
(74) Representative: Brierley, Anthony Paul

(57) **Abstract**

A seat device 2 includes a seat member 4 and, pivoted thereto, a seat back 6. A first end 8 of the device is positioned adjacent vertically extending side wall of a bus. The device is arranged to be moved between the operative configuration shown in Figure 1(a) and the storage configuration shown in Figure 1(d) by sliding the device horizontally in the direction of arrows 14 to the position shown in Figure 1(b); pivoting the seat back so that it lies flat against the seat member as shown in Figure 1(c); and folding a leg 12 of the device inwardly and pivoting the device about its first end 8, to the position shown in Figure 1(d). When so disposed, the space vacated by the device may accommodate a wheel chair.

## Description

This invention relates to a seat device and particularly, although not exclusively, relates to a passenger seat device for a passenger vehicle, for example a bus or a mini-bus.

The operators of passenger vehicles are obliged to provide facilities for wheelchair-bound passengers. At the present time, many passenger vehicles are modified by the complete removal of a two person seat, so as to provide a space large enough to accommodate a wheelchair. Disadvantageously, if the wheelchair space is unoccupied by a wheelchair-bound passenger, an able-bodied passenger cannot be seated in the space because the two person seat has been completely removed. Also, the seat cannot quickly be replaced in position after its complete removal.

It is an object of the present invention to provide a seat device which may alleviate the aforementioned disadvantages.

According to a first aspect of the present invention, there is provided a seat device arranged to be fixed to a structure and being movable between a first operative configuration and a second storage configuration, the seat device including a seat member arranged to undergo translational movement during movement of said device between said first and second configurations.

Such a seat device may advantageously be moved relatively quickly and easily between said first operative configuration, wherein the seat member of the seat device is suitably arranged to be sat upon by a person or persons, and said second storage configuration in which the device may be positioned, for example, adjacent a wall of a vehicle, thereby leaving a space in which a wheelchair may be positioned.

Said seat device is preferably arranged to be fixed in a vehicle.

Said seat member is preferably arranged to undergo translational movement between first and second positions. Said translational movement of said seat member between said first and second positions is preferably substantially linear. Said seat member suitably defines a substantially planar, suitably generally horizontally extending, surface upon which a person may sit. Said seat member is preferably arranged to undergo translational movement in a direction substantially parallel to said substantially planar surface of said seat member. Said seat member suitably includes front and rear portions which extend generally in a first direction. In use, a person suitably sits on the seat to face in a direction which is substantially perpendicular to said first direction. Preferably, at least a component of the translational movement of the seat member between its first and second positions is in said first direction. Said seat member is preferably arranged to undergo translational movement in order to adjust the distance of the seat member from a wall, for example of the vehicle. Said first direction preferably extends substantially perpendicularly to the wall.

Guide means is preferably provided for guiding translational movement of said seat member. Said guide means is preferably arranged to guide sliding movement. A first slide element is preferably fixed relative to said seat member and a second slide element is preferably fixed relative to a first support part of said seat device, said first and second slide elements being arranged to slidably co-operate with one another. In a preferred embodiment, said first slide element comprises an elongate channel and said second slide element is arranged to engage with and be slidable within said channel.

Said seat member is preferably arranged also to undergo pivotal movement during movement of the device between said first and second configurations. A pivot axis of said member preferably extends in a direction which is transverse to the direction of translational movement of said device; that is transverse to said first direction. Preferably, said pivot axis extends in a second direction which is substantially perpendicular to said first direction. Said seat member is preferably arranged to be pivoted through about 90° between said first operative configuration and said second storage configuration. Said seat member is preferably arranged to be pivoted between a substantially horizontal position and an upright, preferably substantially vertical, position.

Where the device includes a first support part relative to which a second slide element is attached as described above, preferably said first support part is arranged to undergo pivotal movement. Preferably, said first support part is pivoted about an axis which is substantially horizontally arranged in use.

Said seat device preferably includes a seat back. Said seat back is suitably arranged adjacent to said rear portion of said seat member and when said seat device is in said first operative configuration, said seat back extends upwardly from said seat member. Said seat back is preferably arranged to pivot between first and second positions. A pivot axis for said seat back preferably extends in said first direction. In said first position said seat back preferably extends upwardly and the seat device is in said first operative configuration. In said second position, a main plane of said seat back is suitably arranged substantially parallel to a main plane of the seat member and/or the main planes of the seat back and seat member may abut one another.

Said seat device preferably includes first securement means for securing the device to said structure, for example to a vehicle, more preferably relative to a floor. Said first securement means is preferably arranged to be substantially permanently fixed relative to the floor, for example by bolts. A first support means may be fixed relative to said first securement means. Said first support means may include a first support leg or legs. Where the device includes a first support part as described above, said first support part is preferably pivotal relative to said first support leg(s).

Said seat device preferably includes second securement means for securing the device relative to a floor. Said second securement means is preferably releasably securable relative to the floor. Said second securement means may include a second support leg or legs.

According to a second aspect of the present invention, there is provided an assembly comprising a seat device according to the first aspect, said seat device being fixed to a structure, for example in a confined space. Said seat device is preferably fixed in a vehicle.

According to a third aspect of the present invention, there is provided a method of moving a seat device according to said first aspect between a first operative configuration and a second storage configuration, preferably within a vehicle, the method including the step of causing a seat member of the seat device to undergo translational movement.

Specification embodiments of the invention will now be described, by way of example, with reference to the accompanying diagrammatic drawings, in which:
Figure 1 is a schematic representation of four stages (stages (a) to (d)) in the movement of a seat device between a first operative position and a second storage position;

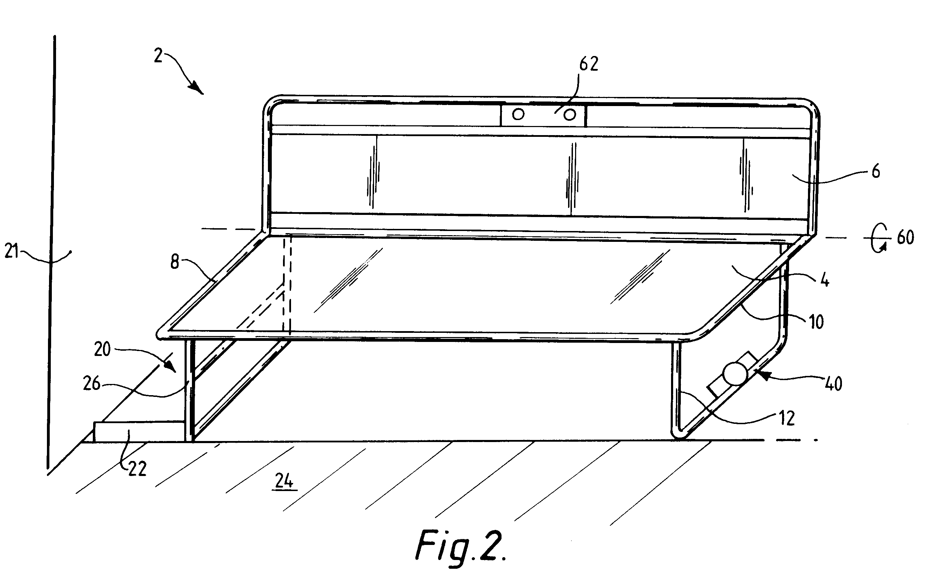

Figure 2 is a front perspective view of the seat device in the position of Figure 1(b), wherein seat cushions and trim have been omitted in the interests of clarity;
Figure 3 is a side elevation, partly in cross-section, of the seat device in a storage position, as shown in Figure 1(a);
Figure 4 is a front elevation of the device of Figure 3 in the direction of arrow IV;
Figure 5 is a cross-section along line VII-VII of Figure 4;
Figure 6 is a plan view of a receiver;
Figure 7 is a cross-section along line VI-VI of Figure 6; and
Figure 8 is a side elevation of a screw lock device arranged to co-operate with the receiver of Figures 6 and 7.

In the figures the same or similar parts have the same reference numerals.

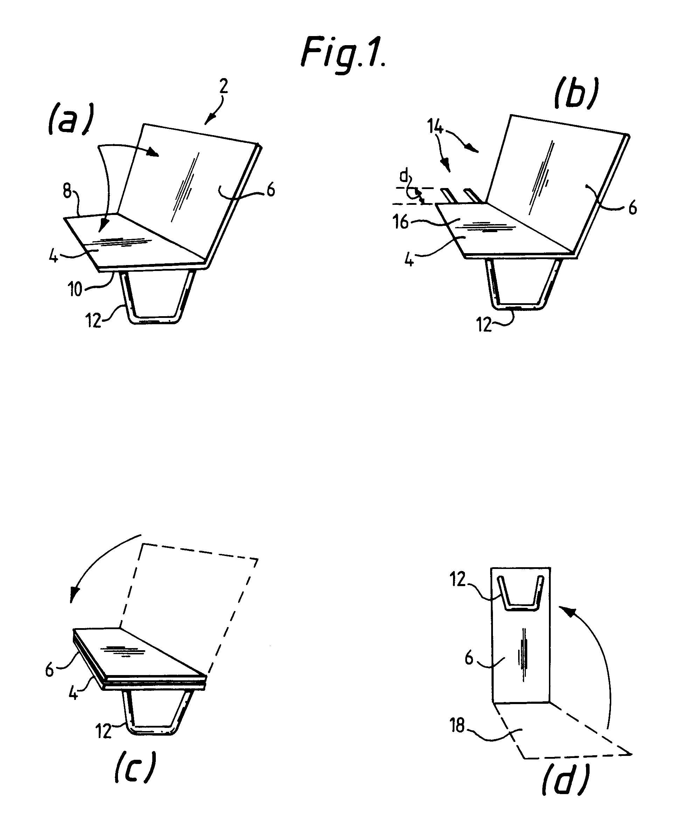

Referring to Figure 1(a), the seat device 2 includes a cushioned horizontally disposed seat member 4 and, pivoted thereto, an upwardly extending cushioned seat back 6. A first end 8 of the device 2 is positioned adjacent a vertically extending side wall (not shown) of, for example, a bus. A second end 10 of the device is positioned adjacent an aisle (not shown) of the bus. The seat device includes a first support leg (not shown) arranged towards the first end 8 and a second support leg 12 arranged towards the second end 10.

When in the first operative position shown in Figure 1(a), the seat device 2 defines a normal two person seat. Should it be necessary to provide a space within the vehicle for accommodating a wheelchair-bound passenger, the seat device 2 may be re-configured, as follows:

Firstly, leg 12 is disengaged from the floor and then the device is slid in a horizontal direction as represented by arrows 14 in Figure 1(b) so that first end 8 is moved by a distance "d" away from the vertically extending side wall of the bus.

Next, the seat back 6 is pivoted about a pivot axis so that it lies substantially flat against an upwardly facing seat surface 16 of the seat member 4, as shown in Figure 1(c).

The second supporting leg 12 is then pivoted about its pivot axis so that it lies substantially flush against the underside of the seat member 4 and, finally, the seat member and seat back arrangement are pivoted about a pivot axis so that the whole seat device 2 is positioned adjacent the side wall of the bus in a storage position, thereby leaving a space 18 in which a wheelchair may be positioned, as shown in Figure 1(d).

The seat device 2 may be re-configured in the operative position by following steps (a) to (d) described above in reverse sequence.

The seat device 2 will now be described in detail.

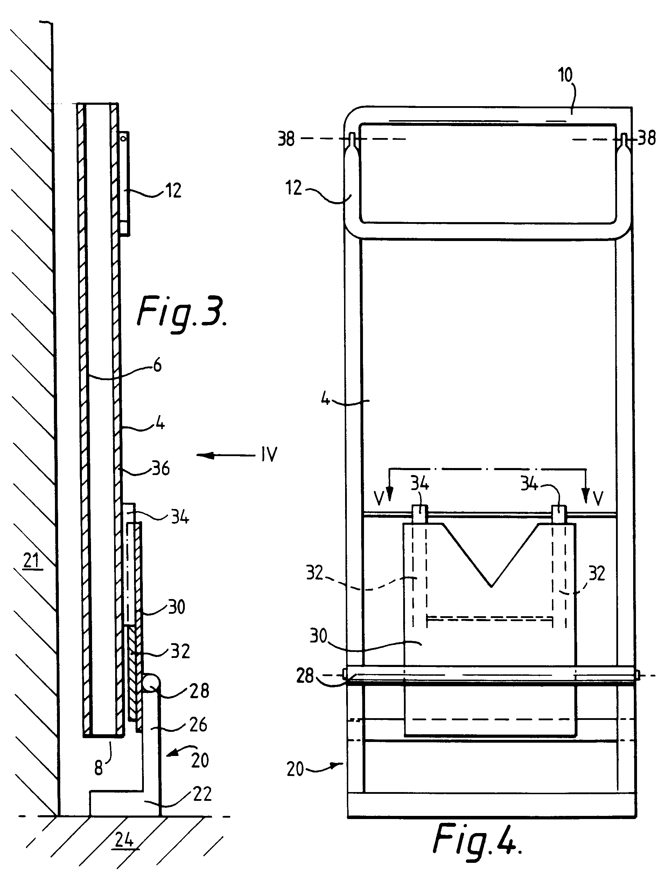

The device 2 includes a substantially L-shaped support leg arrangement 20, spaced from a wall 21 of the bus, and including a plate 22 secured to the floor 24 of the bus. Extending upwardly from the plate 22 is a support leg 26. At its upper end, the support leg 26 includes a pivot arrangement 28 (Figure 3) which is arranged to allow a seat support plate 30 to be pivoted.

The support plate 30 carries two spaced-apart elongate sliders 32 which are slidably received in two correspondingly shaped elongate channels 34 which are fixed to the underside 36 of the seat member 4. By means of the co-operating sliders 32 and channels 34, the seat member 4 (and parts fixed thereto) may be slid relative to the support plate 30 (and parts fixed thereto).

The support leg 12, provided towards the second end 10 of the seat device 2, is pivotally mounted, at spaced apart pivot points 38, to the underside of the seat member 4. A securement means (not shown) is provided for securing the leg 12 in the retracted position of Figure 1(d) or the extended position of Figures 1(a) to (c).

Co-operating with a lower part of the supporting leg 12 is a securement device 40 for securing the leg 12 to the floor 24 thereby to render the seat device 2 substantially immovable when in the operative position.

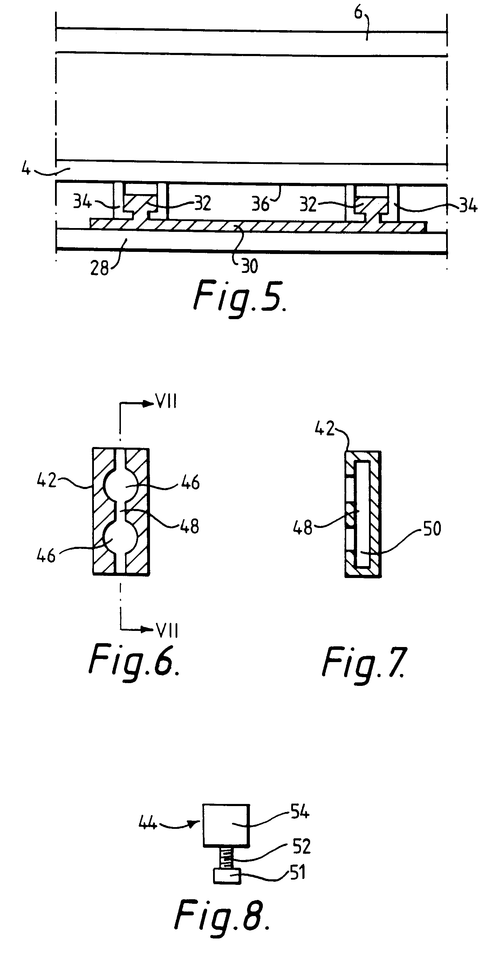

Referring to Figures 6 to 8, the securement device 40 includes a receiver 42, fixed to the floor 24 and a screw lock device 44 fixed to the support leg 12. The receiver 42 includes two circular cross-section openings 46 linked by an elongate opening 48 and leading into a channel 50. The lock device 44 includes a head part 51 fixed to a screw shaft 52 upon which a body part 54 is screw-threadedly mounted. The securement device 40 is operable as follows.

With support leg 12 adjacent the floor and directly above the receiver 42, the head part 51 of lock device 44 is pushed through one of the openings 46 into the channel 50 of the receiver. The device 44 is then slid within the channel 50 until head part 51 is opposite elongate opening 48 (through which the head part 51 cannot pass). The body part 54 is then screwed downwardly, so as to secure the device 44 in position. The device 40 may quickly be released by following the abovementioned steps in reverse.

Seat back 6 of the seat device 2 is pivotally mounted about pivot axis 60 to the seat member 4. A quick-release handle operated lock arrangement (not shown) is provided for securing the seat back 6 in its upright position. The seat back 6 carries a seat belt anchoring plate 62.

The operation of the device 2 during stages (a) to (d) of Figure 1 will now be described in greater detail.

To move between the configurations of Figures 1(a) and 1(b), the lock device 44 of the ground securement device 40 is released in the manner described above. Then, the seat member 4 is grasped by an operator and pulled in a horizontal direction away from wall 21. As the seat member 4 is pulled, sliders 32, fixed to plate 30, are caused to slide within channels 34 fixed to the seat member 4 and, therefore, the seat member 4 (and parts fixed thereto) moves linearly in a direction parallel to the plate 30. It should be noted that, at all times during operation of the device 2, the support leg arrangement 20 remains unmoved.

To move between the configurations of Figures 1(b) and 1(c), the seat back 6 is pivoted about pivot axis 60.

To move between the configurations of Figures 1(c) and 1(d), the support leg 12 is pivoted about pivot axis 38 and then the support plate 30 (and parts secured thereto, including the seat member 4 and seat back 6) is caused to pivot about pivot arrangement 28 to the position shown in Figure 3. It should be noted from Figure 3 that the seat member 4 and seat back 6 are stored between the support leg arrangement 20 and the wall 21 and that first end 8 of the device 2 is disposed at a lower level than that of pivot arrangement 28.

It should be appreciated that the movement of device 2 between its operative position and its storage position can be effected quickly and in a simple manner. For example, the device 2 may be configured in an inoperative position should a wheelchair-bound person get on the bus, but may be re-configured in its operative position should the wheelchair-bound person leave the bus. Thus, provision of device 2 may optimise the use of available space in the bus.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A seat device arranged to be fixed to a structure and being movable between a first operative configuration and a second storage configuration, the seat device including a seat member arranged to undergo translational movement during movement of said device between said first and second configurations.

2. A seat device according to Claim 1, where said device is arranged to be fixed in a vehicle.

3. A device according to Claim 1 or Claim 2, wherein, in use, said seat member is arranged to be sat upon when the device is in said first operative configuration and, when the device is in said second storage configuration, a space, vacated by said device, is defined in which a wheelchair may be positioned.

4. A device according to any preceding claim, wherein said seat member includes a rear portion which extends generally in a first direction and at least a component of the translational movement of the seat member is in said first direction.

5. A device according to any preceding claim, wherein said seat member is arranged to undergo translational movement in order to adjust the distance of the seat member from a wall part of said structure.

6. A device according to any preceding claim, wherein said seat member is arranged to undergo pivotal movement during movement of the device between said first and second configurations.

7. A device according to Claim 6, wherein a pivot axis of said seat member extends in a direction which is transverse to the direction of translational movement of said device.

8. A device according to any preceding claim, including a seat back arranged to pivot between first a second positions.

9. An assembly comprising a seat device according to any of Claims 1 to 8, said seat device being fixed to a structure.

10. A method of moving a seat device according to any of Claims 1 to 9 between a first operative configuration and a second storage configuration, the method including the step of causing a seat member of the seat device to undergo translational movement.
